# DEMANDE DE BREVET EUROPEEN

(11) **EP 1 004 251 A1**
(43) Date de publication de la demande: **31.05.2000**
(21) Numéro de dépôt: 99402923.9
(22) Date de dépôt: 24.11.1999
(51) Int. Cl.: A41D 27/06, A43B 13/38, D06M 17/00, A41D 31/02

(54) **Insert imper-respirant et ses utilisations dans des articles d'habillement et des articles chaussant**

(30) Priorité: 27.11.1998 FR 9814982
(71) Demandeur: LAINIERE DE PICARDIE: Société anonyme, 80200 Peronne (FR)
(72) Inventeur: Manigolg,Eric, 80200 Peronne (FR)
(74) Mandataire: Derambure, Christian

(57) **Abrégé**

L'invention se rapporte à un insert imper-respirant (1) destiné à être utilisé dans les industries de l'habillement, notamment dans des vêtements ou des chaussures.

L'insert imper-respirant (1) comprend une couche ou un film d'un matériau semi-perméable (5), laissant passer la vapeur d'eau mais pas l'eau liquide.

Le film ou la couche de matériau semi-perméable (5) est fixé à un support textile comprenant un tricot (2), et est éventuellement protégé par une couche supplémentaire (6) à base de textile tissé, non-tissé ou tricoté.

L'invention se rapporte également à un article d'habillement, notamment un vêtement ou une chaussure, comportant un tel insert imper-respirant.

## Description

L'invention se rapporte à un insert imper-respirant destiné à l'industrie de l'habillement, notamment pour des vêtements ou des chaussures.

Elle se rapporte également à un article d'habillement, notamment une chaussure ou un vêtement, comportant un tel insert imper-respirant.

Les produits textiles utilisés dans l'industrie de l'habillement sont en évolution constante.

Depuis plusieurs années, des produits textiles dits "imper-respirants" ont été développés. Ces produits présentent la propriété de laisser passer la vapeur d'eau, mais sont imperméables à l'eau.

Ils permettent ainsi, tout en jouant leur rôle de barrière aux liquides, d'éviter la condensation de la transpiration et assurent par conséquent un plus grand confort à l'utilisateur.

Les produits imper-respirants comprennent à la base un matériau polymérique semi-perméable, sous la forme d'une couche ou d'un film.

Dans ce qui suit et pour la commodité du langage, on désignera par matériau polymérique « semi-perméable » un matériau polymérique perméable à la vapeur d'eau mais imperméable à l'eau liquide.

Des produits textiles imper-respirants ont ainsi été développés dans lesquels une couche ou un film d'un polymère semi-perméable est appliqué directement sur une draperie.

On connaît également des produits textiles dans lesquels les propriétés respirantes sont assurées sous la forme d'un insert imper-respirant.

Dans ce type de produits, l'insert imper-respirant comprend un film polymérique semi-perméable assemblé, généralement par collage, avec un support textile tel qu'un produit tissé, non-tissé ou tricoté.

L'insert est ensuite solidarisé, par exemple par couture ou collage, sur l'une des faces d'une draperie ou d'une doublure.

De tels produits imper-respirants sont utilisés dans la fabrication de chaussures.

En effet, la gène occasionnée par la transpiration peut être importante pour ce type de produits, de par la structure relativement fermée d'une chaussure et des possibilités limitées de respiration à l'intérieur de celle-ci.

On a ainsi proposé de placer à l'intérieur des chaussures un insert imper-respirant, pour augmenter la protection contre l'eau, tout en permettant de conserver des possibilités de respiration.

Les documents EP-A-0 729 716, EP-A-0 544 270 et EP-A-0 779 347 décrivent de tels produits.

Les inserts imper-respirants utilisés dans la chaussure présentent cependant des inconvénients.

Le polymère semi-perméable est en effet généralement associé à une couche de mousse ou de matériau non-tissé, notamment de feutre.

Cette couche de mousse ou de non-tissé a pour fonction principale de renforcer la solidité du film semi-perméable et d'améliorer le confort de l'utilisateur.

La durée de vie de cette couche de renfort est cependant relativement limitée.

En outre, les non-tissés à base de feutre présentent des caractéristiques de résilience moyennes.

Parallèlement, les inserts comportant une couche de mousse à la place de feutre, s'ils présentent une meilleure résilience, ont toutefois tendance à diminuer les possibilités de respiration.

L'invention a pour but de répondre à ces inconvénients, en proposant un insert imper-respirant destiné à l'industrie de l'habillement, notamment pour des vêtements ou des chaussures, possédant des propriétés de résilience et de respiration améliorées.

Tout en ayant une durée de vie, ainsi qu'un niveau de confort pour l'utilisateur, acceptables.

A cet effet, l'insert imper-respirant selon l'invention, comprend au moins un polymère semi-perméable associé, sous forme d'une couche ou d'un film, à un support textile.

Le support textile comprend au moins un tricot à deux faces endroit, les deux faces endroit présentant des mailles endroit sensiblement alignées dans le même plan, les mailles endroit des deux faces du tricot étant reliées entre elles par des fils dont la densité et la nature sont aptes à maintenir un écartement des deux faces du tricot entre elles.

Dans ce qui suit, pour la commodité du langage, les termes « extérieur, externe » et « intérieur, interne » sont utilisés en référence à un utilisateur portant un article d'habillement muni d'un insert imper-respirant selon l'invention.

Ainsi, le terme « intérieur » ou « interne » désignera un élément de l'insert dirigé vers ou en contact avec l'utilisateur et le terme « externe » ou « extérieur » désignera un élément de l'insert placé du côté de l'article d'habillement.

Selon une forme d'exécution de l'invention, le tricot est un tricot double fonture, connu en soi.

Le principe de fabrication de ce type de tricot, encore appelé espaceur, consiste à jeter les fils sur les aiguilles de la fonture avant, puis sur celles de la fonture arrière.

Les tricots double fonture peuvent être obtenus à partir de métiers chaîne ou Rachel, avec généralement plusieurs barres à passettes enfilées « plein » ou « façonné ».

Lorsque la barre à passettes avant alimente la fonture arrière et la barre à passettes arrière alimente la fonture avant, on obtient un tricot double face, les deux faces étant liées entre elles par leur pied de maille.

Suivant la nature, les caractéristiques et le nombre de fils utilisés en liaison entre les deux faces, le tricot obtenu présente une structure résiliente, les mailles endroit sur l'une des faces du tricot pouvant venir au contact des mailles sur l'autre face du tricot sous l'action d'une force extérieure, mais revenant ensuite à leur position initiale.

Dans la suite de la présente demande de brevet, on désignera par tricot double fonture le tricot utilisé dans le cadre de l'invention, étant entendu toutefois que cette désignation l'est uniquement par souci de concision et n'entend limiter en aucune manière les tricots utilisables tels que définis dans ce qui précède aux seuls tricots double fonture.

Selon d'autres caractéristiques, le tricot double fonture est réalisé à partir de fils naturels, synthétiques et/ou artificiels.

Des exemples de fils naturels ou artificiels utilisables dans le cadre de l'invention comprennent par exemple les fils de laine, lin, coton, viscose, ainsi que les dérivés et/ou mélanges de ces produits.

Des fils synthétiques utilisables comprennent par exemple les fils de polyester, polyamide, notamment de polyamide 6 ou 6.6, plats ou texturés.

Les fils texturés peuvent être obtenus par une technique classique de texturation, par exemple par fausse torsion.

Les fils utilisés pour la réalisation du tricot peuvent être mono- ou multifilaments.

La nature des fils utilisés pour la constitution du tricot peut varier dans une large mesure.

En particulier, le tricot peut être réalisé à partir de plusieurs fils de natures et/ou de caractéristiques différentes.

On peut par exemple utiliser un mélange de fils synthétiques de polyamide et de fils synthétiques de polyester, en fonction des caractéristiques souhaitées pour le tricot.

Il va de soi que le titrage des fils utilisés et la densité de mailles du tricot peuvent également varier dans une large mesure, en fonction de l'utilisation et de la destination de l'insert imper-respirant.

A titre d'exemple, le titrage des fils composant le tricot peut varier d'environ 15 à environ 200 décitex.

Les deux réseaux de mailles composant le tricot double fonture peuvent être identiques ou différents.

Ainsi, il peut être avantageux de prévoir que les deux réseaux de mailles endroit ne présentent pas les mêmes caractéristiques.

Par exemple, les mailles situées sur la face du tricot destinée à être placée de façon interne, du côté de l'utilisateur, peuvent présenter une densité de mailles plus importante que celle des mailles situées sur la face du tricot destinée à être placée vers l'extérieur de l'article d'habillement.

Ceci pour améliorer la protection de la couche semi-perméable et le confort de l'utilisateur.

Selon d'autres caractéristiques, la couche de polymère semi-perméable est réalisée à partir d'un matériau perméable à la vapeur d'eau mais imperméable à l'eau liquide.

Il peut s'agir notamment d'un matériau à base de polyuréthanne, de polyamino-acide, de polyester, de polytétrafluoroéthylène (PTFE), ainsi que les dérivés et/ou mélanges de ces produits.

Par exemple, le film semi-perméable peut être un film hydrophile à base de polyester, polyuréthane, polyamino-acide, ainsi que les dérivés et/ou mélanges de ces produits.

Il peut également s'agir d'un film microporeux, à base de polyuréthanne, PTFE, ainsi que les dérivés et/ou mélanges de ces produits.

Par exemple, il peut s'agir d'un film, par exemple de polyuréthanne, comportant des pores d'un diamètre d'environ 0,2 micron qui permettent la circulation de la molécule d'eau mais pas de l'eau liquide.

Ces matériaux sont couramment utilisés en tant que matériau semi-perméable et leur préparation ne sera pas décrite plus en détail ici.

Selon une forme de réalisation, le film semi-perméable est assemblé avec le tricot par un collage discontinu, par exemple sous forme de points ou de lignes, de manière à assurer la circulation des molécules d'eau au travers des moyens de collage et donc au travers de l'insert.

Un tel assemblage permet également de procurer à l'insert imper-respirant une souplesse convenable à l'ensemble ainsi constitué.

De nombreuses méthodes de collage permettent ce type d'assemblage.

On peut ainsi utiliser des polymères thermoplastiques, tels que les polymères à base de polyamide, polyester, polyuréthanne, polyéthylène.

On peut également utiliser des polymères réticulables par eux-mêmes tels que des polyuréthannes bi-composants, des copolymères éthylène-acide acrylique, des terpolymères éthylène-ester acrylique-anhydryde maléique.

D'autres polymères utilisables sont ceux réticulables par l'action d'agents de réticulation.

De tels agents de réticulation peuvent être incorporés à l'adhésif et comprennent par exemple les résines mélamine formaldéhyde, urée formaldéhyde, phénol formaldéhyde.

D'autres agents de réticulation utilisables comprennent par exemple les hydroxydes de métal alcalin, les complexes de zinc ou de zirconium, des polyamines, époxies, des aziridines polyfonctionnelles.

La réticulation de la matière adhésive peut être également provoquée par un agent de réticulation tel que l'humidité résiduelle ou ambiante lors de la fabrication de l'insert.

Les points de matière adhésive peuvent être déposés à l'aide d'un cylindre, sous forme de pâte ou de poudre, ou encore saupoudrés ou pulvérisés sur le support textile ou sur le film semi-perméable.

L'association des deux éléments est ensuite réalisée de manière conventionnelle sur une presse.

On peut par exemple employer une ligne d'enduction de sérigraphie point - pâte en phase aqueuse, suivie d'une ligne de calandrage.

Ainsi, à l'aide d'un cylindre perforé à 11 Mesh soit 23 trous/cm², une formulation à base de polymère thermofusible est déposée de préférence sur le support textile.

Le support textile enduit passe ensuite dans un four réglé à environ 130°C pour sécher le polymère et permettre sa fixation sur le support.

Le film semi-perméable est alors appliqué sur le support enduit à l'aide d'une presse à 1 30°C.

Selon une forme d'exécution de l'invention, l'insert imper-respirant comprend de plus au moins une couche de protection externe supplémentaire.

Cette couche de protection supplémentaire est destinée à être localisée sur la couche ou film semi-perméable de l'insert.

La couche de protection supplémentaire peut être réalisée à partir d'un tricot-maille classique, notamment du type à mailles jetées, d'un poids variant entre environ 20 et environ 90 g/m².

Il peut s'agir également d'une couche d'un produit textile non-tissé ou tissé.

Les matières premières décrites dans ce qui précède pour le tricot double fonture sont également utilisables pour réaliser la ou les couches de protection supplémentaire.

La ou les couches de protection supplémentaire peuvent être assemblées sur la couche ou film semi-perméable par collage, en utilisant les techniques décrites dans ce qui précède.

Elle peut également être solidarisée à la couche ou film semi-perméable par couture. Dans ce cas, un matériau thermocollant, sous forme par exemple d'une lamelle ou d'une bande d'étanchement, est déposé au niveau des coutures, pour assurer l'étanchéité de l'insert au niveau de cette couture.

Dans certains cas, il peut être envisagé de prévoir plusieurs couches de protection superposées pour le film semi-perméable.

L'invention vise également à protéger des articles d'habillement comprenant un insert imper-respirant selon l'invention.

L'article d'habillement selon l'invention, tel que vêtement ou chaussure, comprend au moins un insert imper-respirant tel que défini dans ce qui précède.

L'insert imper-respirant est placé généralement à l'intérieur de l'article, de manière à modifier les qualités et propriétés propres de la draperie - s'il s'agit d'un vêtement - ou du matériau externe, par exemple du cuir - s'il s'agit d'une chaussure -.

Dans le cas d'un vêtement, l'insert imper-respirant est généralement placé entre la draperie et la doublure ou en remplacement de la doublure.

Dans le cas d'une chaussure, l'insert imper-respirant est généralement placé du côté intérieur de la tige.

Selon une forme d'exécution, l'insert imper-respirant est disposé de façon que le film ou la couche semi-perméable soit dirigé de façon externe (en contact avec la face interne de la tige), le support textile comprenant le tricot double fonture étant dirigé de façon interne (côté utilisateur). Lorsqu'une couche de protection supplémentaire est prévue, la couche de protection supplémentaire est placée contre le film ou couche semi-perméable, de façon à être externe.

Selon un mode d'exécution, l'insert imper-respirant comporte de plus, en position interne, une doublure de propreté dont la fonction est essentiellement esthétique.

Cette doublure de propreté peut être réalisée à partir d'un tricot - maille.

Il peut s'agir par exemple d'une maille dite grattée, offrant un toucher doux.

Généralement, l'insert imper-respirant, pour son association avec un vêtement ou une chaussure, comprend plusieurs inserts imper-respirants associés entre eux. Ceci en raison notamment des dimensions, de la forme du vêtement ou de la chaussure, dans lequel l'insert est placé.

Par exemple, dans le cas d'une chaussure, l'insert imper-respirant peut prendre la forme d'un chausson, placé à l'intérieur de la chaussure, et composé de plusieurs inserts imper-respirants selon l'invention assemblés entre eux de façon à présenter une forme externe de chausson.

L'assemblage des différents inserts imper-respirants est généralement réalisé par une ou plusieurs coutures.

Pour garantir l'étanchéité au niveau des coutures, un matériau thermocollant, par exemple sous forme de lamelle ou de bande d'étanchement, est déposé au niveau des coutures, comme décrit précédemment pour la couche de protection supplémentaire.

L'insert imper-respirant peut être solidarisé à l'article d'habillement en étant fixé audit article sur la majeure partie de sa surface.

En variante, il peut être placé de façon volante, en étant solidarisé uniquement sur le pourtour de la draperie, du matériau externe ou de la doublure.

Dans le cas d'une chaussure, l'insert imper-respirant peut être fixé, au niveau de la première de montage ou de la semelle, contre la tige.

En variante, l'insert imper-respirant peut être fixé contre la majeure partie de la tige.

La fixation en elle-même de l'insert imper-respirant à l'intérieur de la chaussure est réalisée par collage.

Eventuellement, la région de l'insert imper-respirant localisée à la partie supérieure de la tige peut être fixée par couture.

Selon une autre forme d'exécution, l'insert imper-respirant peut être utilisé de façon à former un chausson amovible, venant s'insérer dans la chaussure elle-même.

L'invention sera mieux comprise dans la description qui suit, faite en référence aux figures annexées.

La figure 1 représente schématiquement une vue en coupe longitudinale d'un mode de réalisation de l'insert imper-respirant selon l'invention.

La figure 2 représente une vue schématique partielle en persoective, vue de dessous, d'une chaussure munie d'un autre mode de réalisation de l'insert imper-respirant selon l'invention.

La figure 3 représente une vue schématique partielle en perspective, vue de dessous, d'un autre mode de réalisation d'une chaussure munie d'un insert imper-respirant selon l'invention.

Par souci de clarté, les dimensions relatives des différents éléments représentés sur les figures ont été agrandies et ne correspondent donc pas à la réalité.

De même et toujours par souci de clarté, les coutures et bandes d'étanchement utilisées notamment pour la couche de protection supplémentaire ou la doublure de propreté ne sont pas représentées sur les figures.

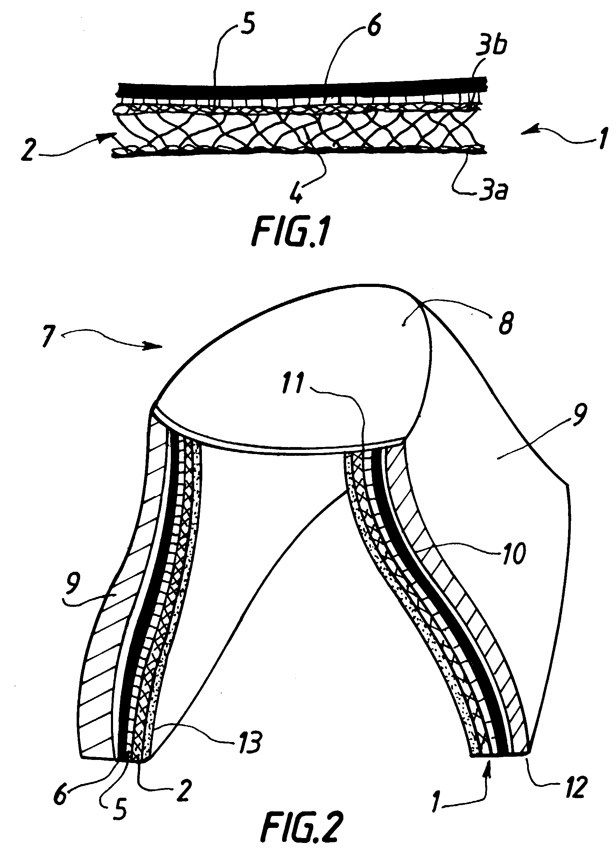

En se référant maintenant à la figure 1, l'insert imper-respirant 1 selon l'invention comprend un tricot 2 double fonture.

Le tricot 2 est composé par exemple d'une face interne 3a, maille à structure nid d'abeille, en polyester texturé et d'une face externe 3b, maille charmeuse, en polyester texturé, reliées entre elles par des fils 4 en polyamide monofilament.

Le tricot 2 peut ainsi présenter une épaisseur d'environ 2 mm pour un poids d'environ 200 g/m².

Les fils 4 peuvent être disposés sensiblement tous selon la même orientation ou être disposés selon une orientation alternée, comme représenté sur la figure 1.

Sur l'une des faces du tricot 2, un film semi-perméable 5 est déposé et solidarisé au tricot 2 par collage.

L'insert imper-respirant 1 comprend également une couche de protection supplémentaire consistant en un tricot 6 à mailles jetées, déposé et solidarisé sur le film ou couche semi-perméable 5 par collage.

La figure 2 illustre une chaussure comportant un insert selon l'invention.

En se référant maintenant à cette figure, la chaussure 7 comprend une semelle 8 et une tige 9.

La face interne 10 de la tige 9 est muni d'un insert imper-respirant 1 selon l'invention.

Selon la forme d'exécution représentée, l'insert imper-respirant 1 est fixé par collage au niveau de la première de montage 11 de la chaussure 7 et par une couture (non représentée) au niveau de la partie supérieure 12 de la face interne 10 de la tige 9.

L'insert imper-respirant 1 comprend, de l'extérieur vers l'intérieur, une couche de protection 6 consistant en un tricot - mailles, un film semi-perméable 5, le tricot 2 double fonture et une doublure de propreté 13.

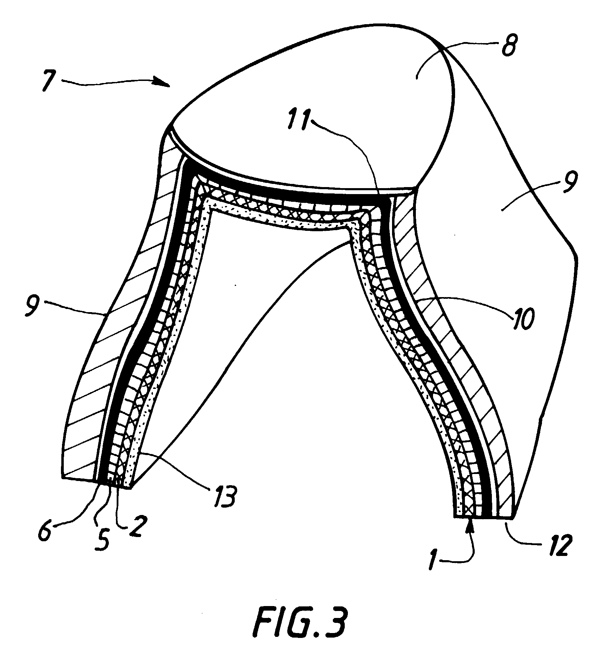

La figure 3 représente un autre mode de réalisation d'une chaussure comportant, à l'intérieur de celle-ci, un insert imper-respirant selon l'invention.

Selon cette forme de réalisation, la chaussure 7 comprend une semelle 8 et une tige 9.

L'insert imper-respirant 1 comprend, de l'extérieur vers l'intérieur, une couche de protection 6 consistant en un tricot-mailles, un film semi-perméable 5, un tricot 2 double fonture et une doublure de propreté 13.

L'insert imper-respirant 1 recouvre la face interne 10 de la tige 9 de la chaussure 7, et également la face interne de la première de montage 11 de la chaussure 7.

L'insert imper-respirant 1 forme alors, selon cette forme de réalisation, une chausson placé à l'intérieur de la chaussure 7.

L'insert imper-respirant 1 peut être fixé à la chaussure 7 tel que décrit précédemment en relation avec la figure 2.

## Revendications

1. Insert imper-respirant (1) comprenant au moins une couche d'un polymère semi-perméable (5) associé, sous forme d'une couche ou d'un film, à un support textile, ledit support textile comprenant au moins un tricot (2) à deux faces endroit, caractérisé en ce que les deux faces endroit présentent des mailles endroit (3) sensiblement alignées dans le même plan, et en ce que les mailles endroit des deux faces du tricot (2) sont reliées entre elles par des fils (4) dont la densité et la nature sont aptes à maintenir un écartement des deux faces du tricot (2) entre elles.

2. Insert selon la revendication 1, caractérisé en ce que le tricot (2) est un tricot double fonture.

3. Insert selon la revendication 1 ou 2, caractérisé en ce que le tricot (2) est réalisé à partir de fils naturels, synthétiques et/ou artificiels.

4. Insert selon la revendication 3, caractérisé en ce que des fils naturels ou artificiels utilisables comprennent par exemple les fils de laine, lin, coton, viscose, ainsi que les dérivés et/ou mélanges de ces produits.

5. Insert selon la revendication 3, caractérisé en ce que des fils synthétiques utilisables comprennent par exemple les fils de polyester, polyamide, notamment de polyamide 6 ou 6.6, plats ou texturés.

6. Insert selon l'une quelconque des revendications 3 à 5, caractérisé en ce que les fils sont mono- ou multifilaments.

7. Insert selon l'une quelconque des revendications 3 à 6, caractérisé en ce que le titrage des fils composant le tricot (2) peut varier d'environ 15 à environ 200 décitex.

8. Insert selon l'une quelconque des revendications 1 à 7, caractérisé en ce que les deux réseaux de mailles (3) composant le tricot (2) double fonture sont identiques ou différents.

9. Insert selon la revendication 8, caractérisé en ce que les mailles (3) situées sur la face du tricot (2) destinée à être placée de façon interne, du côté de l'utilisateur, présentent une densité de mailles plus importante que celle des mailles (3) situées sur la face du tricot (2) destinée à être placée vers l'extérieur.

10. Insert selon l'une quelconque des revendications 1 à 9, caractérisé en ce que la couche ou film semi-perméable (5) est réalisé à partir d'un matériau perméable à la vapeur d'eau mais imperméable à l'eau liquide.

11. Insert selon la revendication 10, caractérisé en ce que le matériau est à base de polyuréthanne, de polyamino-acide, de polyester, de PTFE, ainsi que les dérivés et/ou mélanges de ces produits.

12. Insert selon la revendication 10 ou 11, caractérisé en ce que la couche ou film semi-perméable (5) est réalisé à partir d'un film micro-poreux à base de polyuréthanne, PTFE, ainsi que les dérivés et/ou mélanges de ces produits.

13. Insert selon la revendication 10 ou 11, caractérisé en ce que la couche ou film semi-perméable (5) est réalisé à partir d'un film hydrophile à base de polyester, polyuréthanne, polyamino-acide, ainsi que les dérivés et/ou mélanges de ces produits.

14. Insert selon l'une quelconque des revendications 1 à 13, caractérisé en ce que la couche ou film semi-perméable (5) est assemblé avec le tricot (2) par collage discontinu, par exemple sous forme de points ou de lignes.

15. Insert selon la revendication 14, caractérisé en ce que le collage est réalisé avec des polymères thermoplastiques, tels que les polymères à base de polyamide, polyéthylène, polyester, polyuréthanne, des polymères réticulables par eux-mêmes, tels que des polyuréthannes bi-composants, des copolymères éthylène-acide acrylique, des terpolymères éthylène-ester acrylique-anhydryde maléique, des polymères réticulables par l'action d'agents de réticulation.

16. Insert selon l'une quelconque des revendications 1 à 15, caractérisé en ce qu'il comprend au moins une couche de protection externe supplémentaire (6).

17. Insert selon la revendication 16, caractérisé en ce que la couche de protection supplémentaire (6) est placée sur la couche ou film semi-perméable (5).

18. Insert selon la revendication 16 ou 17, caractérisé en ce que la couche de protection supplémentaire (6) est réalisée à partir d'une couche de textile non-tissé ou tissé.

19. Insert selon la revendication 16 ou 17, caractérisé en ce que la couche de protection supplémentaire (6) est réalisée à partir d'un tricot-maille, notamment à mailles jetées, d'un poids variant entre environ 20 et environ 90 g/m².

20. Insert selon l'une quelconque des revendications 16 à 19, caractérisé en ce que la ou les couches de protection supplémentaire (6) sont assemblées sur la couche ou film semi-perméable (5) par collage.

21. Insert selon l'une quelconque des revendications 16 à 19, caractérisé en ce que la ou les couches de protection supplémentaire (6) sont assemblées sur la couche ou film semi-perméable (5) par des coutures.

22. Insert selon la revendication 21, caractérisé en ce qu'un matériau thermocollant, sous forme par exemple d'une lamelle ou d'une bande, est déposé au niveau des coutures, pour assurer l'étanchéité de l'insert (1) au niveau des coutures.

23. Article d'habillement, tel que vêtement ou chaussure (7), comprenant au moins un insert imper-respirant (1) selon l'une quelconque des revendications 1 à 22.

24. Article d'habillement selon la revendication 23, caractérisé en ce que l'insert imper-respirant (1) est placé à l'intérieur de l'article, de manière à modifier les qualités et propriétés propres de la draperie - s'il s'agit d'un vêtement - ou du matériau externe, par exemple du cuir - s'il s'agit d'une chaussure -.

25. Article d'habillement selon la revendication 23 ou 24, caractérisé en ce que l'insert imper-respirant (1) est placé entre la draperie et la doublure d'un vêtement ou en remplacement de la doublure.

26. Article d'habillement selon la revendication 23 ou 24, caractérisé en ce que l'insert imper-respirant (1) est placé du côté intérieur de la tige (9) d'une chaussure (7).

27. Article d'habillement selon l'une quelconque des revendications 23 à 26, caractérisé en ce que le film ou la couche semi-perméable (5) est placé de façon externe, le tricot (2) formant le support textile étant placé de façon interne.

28. Article d'habillement selon l'une quelconque des revendications 23 à 27, caractérisé en ce que, lorsqu'une couche de protection supplémentaire (6) est prévue, la couche de protection supplémentaire (6) est placée contre le film ou couche semi-perméable (5), de façon à être externe.

29. Article d'habillement selon l'une quelconque des revendications 23 à 28, caractérisé en ce que l'insert imper-respirant (1) comporte de plus, en position interne, une doublure de propreté (13).

30. Article d'habillement selon la revendication 29, caractérisé en ce que la doublure de propreté (13) est réalisée à partir d'un tricot - maille.

31. Article d'habillement selon l'une quelconque des revendications 23 à 30, caractérisé en ce que l'insert imper-respirant (1) est solidarisé à l'article d'habillement en étant fixé à l'article d'habillement sur la majeure partie de sa surface.

32. Article d'habillement selon l'une quelconque des revendications 23 à 30, caractérisé en ce que l'insert imper-respirant (1) est fixé de façon volante, en étant solidarisé uniquement sur le pourtour de la draperie, du matériau externe ou de la doublure.

33. Article d'habillement selon l'une quelconque des revendications 23 à 30, caractérisé en ce que l'insert imper-respirant (1) est solidarisé à une chaussure (7) en étant fixé, au niveau de la première de montage ou de la semelle (8), contre la tige (9).

34. Article d'habillement selon l'une quelconque des revendications 23 à 30, caractérisé en ce que l'insert imper-respirant (1) est solidarisé à une chaussure (7) en étant fixé contre la majeure partie de la tige (9).

35. Article d'habillement selon l'une quelconque des revendications 23 à 34, caractérisé en ce que la fixation de l'insert imper-respirant (1) à l'intérieur d'une chaussure (7) est réalisée par collage.

36. Article d'habillement selon la revendication 35, caractérisé en ce que la région de l'insert imper-respirant (1) localisé à la partie supérieure (12) de la tige (9) d'une chaussure (7) est fixée par couture.

37. Article d'habillement selon l'une quelconque des revendications 23 à 36, caractérisé en ce qu'il comporte plusieurs inserts imper-respirants (1) associés entre eux par une ou plusieurs coutures.

38. Article d'habillement selon la revendication 37, caractérisé en ce qu'un matériau thermocollant, sous forme par exemple de lamelle ou de bande, est déposé au niveau des coutures, pour assurer l'étanchéité au niveau des coutures.

39. Article d'habillement selon l'une quelconque des revendications 23 à 38, caractérisé en ce que l'insert imper-respirant (1) forme un chausson amovible, venant s'insérer dans la chaussure (7) elle-même.
